(19) Europäisches Patentamt European Patent Office Office européen des brevets

(11) **EP 1 946 067 B1**

(12) **EUROPEAN PATENT SPECIFICATION**

(45) Date of publication and mention of the grant of the patent:
**03.05.2017 Bulletin 2017/18**

(21) Application number: **06825949.8**

(22) Date of filing: **13.10.2006**

(51) Int Cl.:
*F23Q 2/16* *(2006.01)*    *F23Q 23/08* *(2006.01)*

(86) International application number:
**PCT/US2006/040192**

(87) International publication number:
**WO 2007/047495 (26.04.2007 Gazette 2007/17)**

(54) **METHOD OF MANUFACTURING A LIGHTER**

VERFAHREN ZUR HERSTELLUNG EINER FEUERZEUGEINRICHTUNG

PROCEDE DE FABRICATION D'UN BRIQUET

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.10.2005 US 596731 P**

(43) Date of publication of application:
**23.07.2008 Bulletin 2008/30**

(73) Proprietor: **ZIPPO MANUFACTURING COMPANY Bradford, Pennsylvania 16701 (US)**

(72) Inventors:
• **MCDONOUGH, James, M.**
  **East Greenwich, RI 02818 (US)**
• **MEISTER, Ronald, J.**
  **Bradford, PA 16701 (US)**
• **JOHNSON, Michael, W.**
  **Port Allegany, PA 16743 (US)**

(74) Representative: **Mears, Andrew David et al Withers & Rogers LLP 4 More London Riverside London SE1 2AU (GB)**

(56) References cited:
| | |
|---|---|
| EP-A1- 0 052 580 | US-A- 2 736 181 |
| US-A- 3 403 963 | US-A- 3 860 385 |
| US-A- 4 235 589 | US-A- 4 311 450 |
| US-A- 4 496 309 | US-A- 5 996 402 |

**Description**

Background

1. Cross-Reference to Related Applications

This application claims priority to U.S. Provisional Patent Application No. 60/596,731, filed October 17, 2005, entitled "Lighter device with flow restrictor and methods of manufacturing and testing same."

2. Technical Field

This disclosure relates to a method of manufacturing open flame lighter devices.

3. Description of Related Art

Open flame lighters are commonly used for igniting tobacco products such as cigarettes, cigars, pipes and the like. Such devices lie in contrast to devices in which a flame is entirely or substantially entirely enclosed, for example, for heating. Many open flame lighters utilize pressurized fuel to induce the flame. Such lighters are commonly referred to as "butane" lighters, although the fuel may be only partially butane. As used herein the term "lighter" refers to all open flame-producing portable devices that use a combustible fluid as fuel, commonly known as cigarette lighters, pipe lighters, and/or cigar lighters and such similar devices. Exemplary devices are defined in ASTM Standard F400-04.
Some conventional lighters utilize an adjustable fuel delivery mechanism to allow the flame height to be adjusted within a predetermined range, such as defined in ASTM Standard F400-04, section 3.1.8. Other conventional lighters utilize a fixed fuel delivery mechanism to effect a fixed flame height. With both types of lighters, the maximum flame height is required to be controlled. It has been found necessary to test such lighters to make sure that the maximum flame height does not exceed a predetermined limit. This typically requires disposing a combustible fuel into the lighters and testing the flame height prior to sale. Once the lighter has been filled with fuel, additional restrictions on the shipment of such lighters may be incurred because they may be classified by some entities as hazardous goods. This adds to the cost and difficulty of distributing such lighters in commerce.
US 4,496,309 describes a liquid gas-operated lighter including a non-adjustable control device for the flame height.
US 4,311,450 describes a device for limiting the gas flow in a discharge valve for gas lighters.
US860385 describes a method of filling a tank of a gas lighter using a vacuum pump.

**Summary**

The present disclosure overcomes the cost and difficulty of distributing lighters with fuel by poviding a method of manufacturing "dry" lighters having flow restrictors, e.g., lighters having not received a combustible fuel, such as, butane or a butane mixture. An exemplary flow restrictor may be formed of a porous member that regulates the flow of fuel through a valve assembly of the lighter to induce a substantially fixed flame height or a variable flame height. The porous member may be rigid or compressible and may include a single opening or a plurality of openings. The flow restrictor is tested after assembly into a lighter. If a non-combustible fluid is used, the flow rate of the non-combustible fluid may be correlated to the flow rate of a combustible fluid (e.g., butane or butane-like mixture) through the flow restrictor to approximate the resultant flame height of a lighter incorporating the tested flow restrictor. When tested after assembly of the flow restrictor into the lighter housing, a non-combustible fluid may be directed through the flow restrictor to assess the flow rate. The flow rate of the non-combustible fluid may be correlated to the flow rate of a combustible fluid through the flow restrictor to approximate the resultant flame height of a lighter incorporating the flow restrictor. In this manner, flow restrictors and corresponding lighter devices may be tested for flame height without introducing combustible fluids into such lighter devices prior to shipment.
Moreover, a vacuum is drawn on the fuel tank of the lighter prior to shipment. The non-combustible fluid is extracted from the fuel tank and a vacuum drawn thereon. Providing a refillable lighter with a fuel tank under vacuum facilitates and enhances the initial filling of the tank with fuel by the consumer, allowing for the fuel to enter the tank without the need to compress the air sealed in the tank during normal manufacturing processes. This allows for the consumer to maximize the initial fill of the tank with fuel, while minimizing internal pressure in the fuel reservoir. This is also advantageous in avoiding pressure increases during transport of lighters in hot climates.

## EP 1 946 067 B1

## Brief Description of the Drawings

Reference is now made to the following descriptions taken in conjunction with the accompanying drawings, in which:

Figure 1 is a sectional side view of a lighter useful in the practice of the present disclosure;
Figure 2 is an enlarged partial sectional view of a portion of valve assembly of Figure 1;
Figure 3 is an enlarged sectional side view of a flow restrictor useful in the lighter of Figure 1 and otherwise in the practice of the present disclosure;
Figure 4 is a view of the inlet end of the flow restrictor of Figure 3;
Figure 5 is a view of the outlet end of the flow restrictor of Figure 3;
Figure 6 is a schematic diagram of a flow restrictor testing system useful in the practice of the present disclosure;
Figure 7 is a sectional side view of an apparatus for testing the flow restrictor of Figure 2;
Figure 8 is a logical flow diagram showing a method for testing the flow restrictor of Figure 2 useful in the practice of the present disclosure;
Figure 9 is a sectional side view showing a test apparatus that interfaces with the lighter of Figure 1 useful in the practice of the present disclosure;
Figure 10 is a sectional side view of a batch testing apparatus for testing a batch of flow restrictors useful in the practice of the present disclosure; and
Figure 11 is a top-down view of an exemplary carrier for holding a batch of flow restrictors, which may be used with the batch testing apparatus of Figure 10.

## Detailed Description

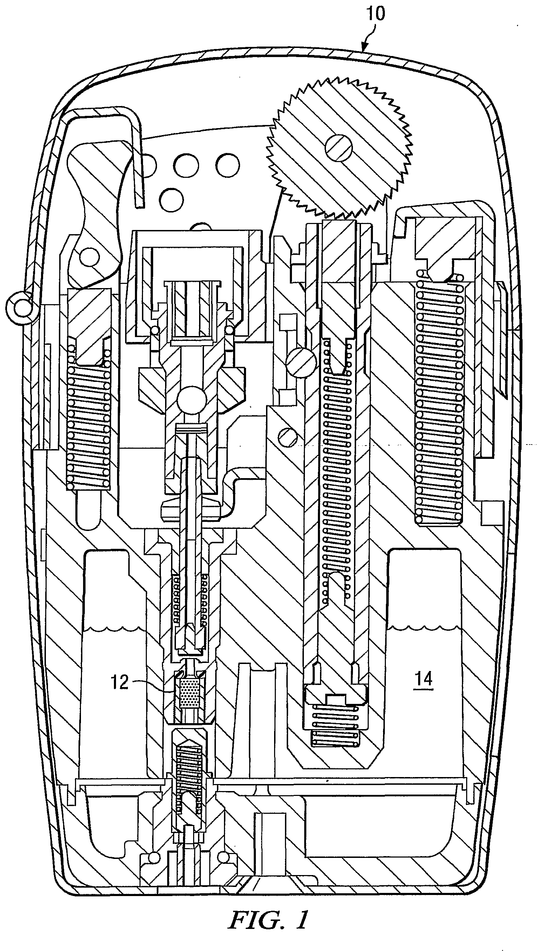

Referring to **FIGURE 1,** a lighter 10 according to the present disclosure is illustrated. It is to be understood, however, that other forms of lighters may be used as alternatives to the lighter 10 shown in FIGURE 1, and that the lighter 10 is presented as an example to illustrate aspects of the present disclosure. Indeed, the lighter 10 may be any lighter device that incorporates a flow restrictor or flow restrictor-like device. The lighter 10 includes a flow restrictor assembly 12, which receives fuel from a fuel storage compartment 14. In practice, a user may initiate a flame by actuating the lighter to induce fluid flow from the storage compartment 14 to and through the flow restrictor assembly 12. As used herein, the term "fluid" refers to fluid in a gaseous state, liquid state, plasma state, or combinations thereof.

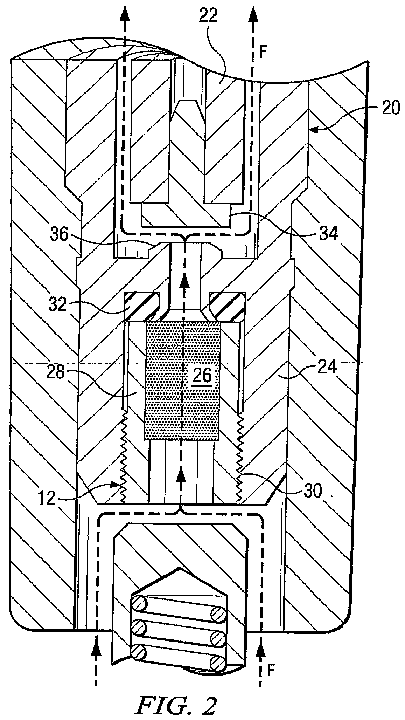

**FIGURE 2** details a portion of a valve assembly 20 of the lighter 10. The valve assembly 20 includes a valve member 22 disposed above the flow restrictor assembly 12, which may be disposed in an interior casing 24 of the lighter 10 such that the flow restrictor assembly 12 lies in an area defined generally adjacent to the storage compartment 14. Accordingly, the lighter 10 defines a fuel flow path F beginning at the storage compartment 14, extending through the flow restrictor assembly 12 and extending upward through the interior casing 24 and past the valve member 22. In other words, the arrows F denote the path and direction of flow. In one embodiment, the flow restrictor assembly 12 includes a flow restrictor 26 disposed within a sleeve 28. In the illustrated embodiment, the flow restrictor 26 is a porous member. The sleeve 28 may be formed of metal and may include a plurality of ridges 30 to securely engage the interior casing 24. The flow restrictor assembly 12 may further include a sealing element, such as an O-ring 32 to seal the fluid flow path. It is to be appreciated that in some embodiments, the flow restrictor assembly 12 may be unitarily formed such that the "assembly" is one integral member.

The flow restrictor 26 may be formed of a variety of materials, including rigid and compressible materials. Exemplary rigid materials include metal, such as stainless steel, and plastic, and may be employed to achieve a fixed flame height. Exemplary compressible materials include elastomeric materials, foams, sponges, and fibrous sheets, and may be employed to achieve variable flame height. For example, the lighter 10 may utilize a screw to compress a porous elastomer flow restrictor, thereby altering fluid flow therethrough when desired. Other rigid and compressible materials are contemplated to fall within the scope of the present disclosure. Furthermore, the flow restrictor 26 may be formed to include a single opening therethrough or a plurality of openings therethrough. In operation, combustible fuel is directed through the flow restrictor 26 to achieve a substantially consistent fluid flow rate therethrough, and to ultimately achieve a desired fixed flame height or a variable flame height falling within a specified range.

The valve member 22 includes a sealing portion 34, which may be actuated to engage a seal seat 36 of the interior casing 24. In operation, the valve member 22 may be actuated downwardly (as viewed in FIGURE 2) to engage the sealing portion 34 with the seal seat 36, thereby effectively blocking upward fluid flow (as viewed in FIGURE 2).

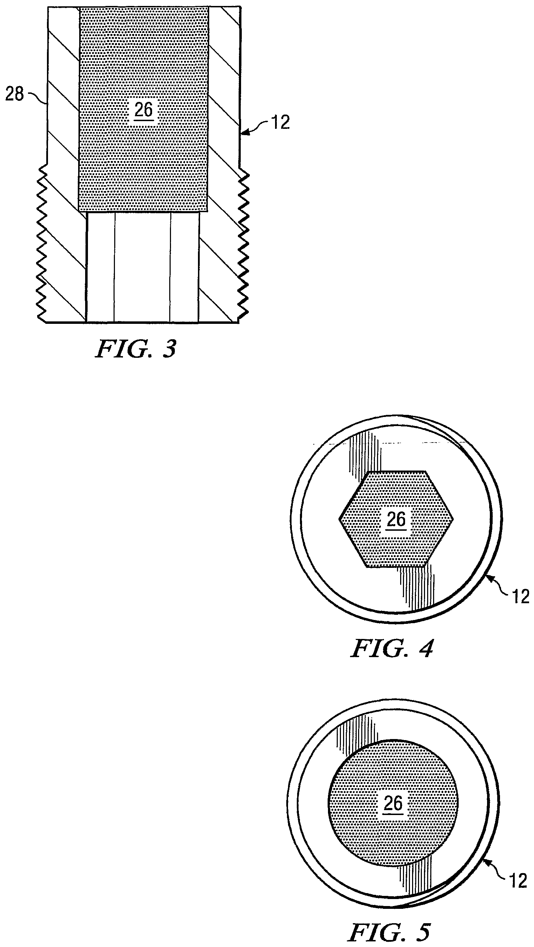

Referring now to **FIGURES 3 - 5,** the flow restrictor 26 is shown in more detail to illustrate a plurality of pores, which cooperatively allow passage of butane, butane-component, or butane-like fluid. The flow restrictor 26, in part or in whole, may be a porous media that provides for a continuous release path for the fluid to flow through. The porosity and exposed surface area of the flow restrictor 26 in combination with the properties and conditions of the fluid govern the flow rate of the fluid through the flow restrictor. Such fluid properties and conditions, *e.g.* density, flow velocity, vapor pressure, and temperature, can affect the resultant flow rate through the flow restrictor. The permeability of the flow restrictor 26 results from its porosity, which is a function of the relative size, shape and number of pores, and the percentage of pores that are connected to form a continuous flow path. It is to be appreciated that the flow restrictor 26 may take on alternative configurations other than a porous configuration so long as the flow restrictor permits fluid flow therethrough in a consistent manner. For example, an alternative flow restrictor may include a tube that restricts the flow of fluid therethrough. In one embodiment, the flow restrictor 26 is manufactured so that the flow therethrough is highly repeatable. By controlling both design and manufacturing parameters of the flow restrictor 26, the fluid flow (particularly for gaseous fluids) is tightly controlled. The flow rate through the flow restrictor 26, and thus the resultant flame height, can be accurately determined via testing of the flow restrictor.

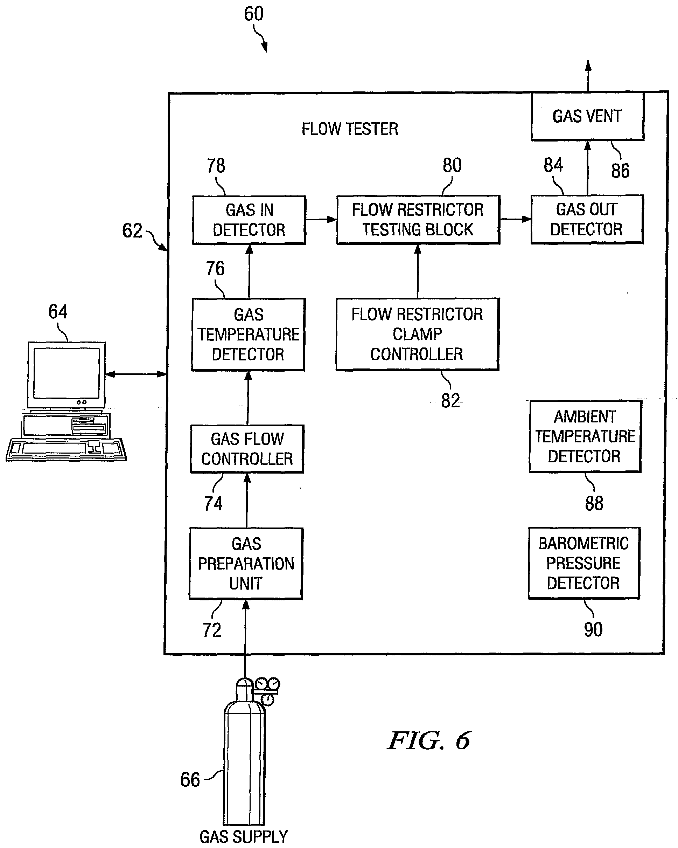

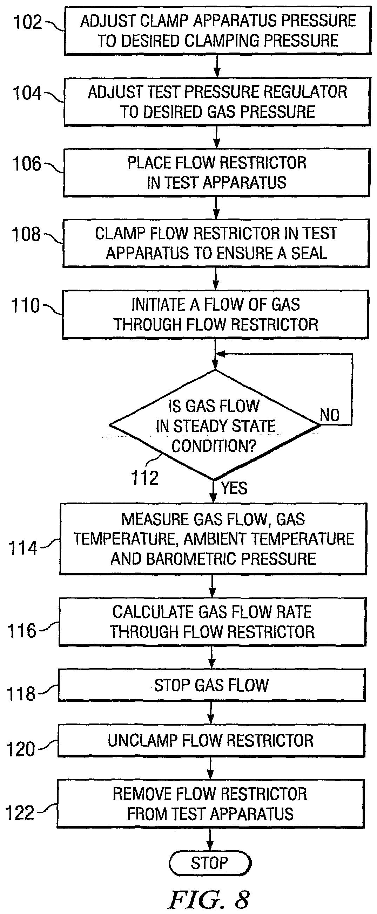

Referring now to **FIGURE 6,** in one implementation of the present disclosure, a testing system 60 may be used to test the flow restrictor 26, which may be disposed in flow restrictor testing block 80. Testing system 60 may include a flow tester 62 that measures the flow rate and other parameters of a gas from gas supply 66 through the flow restrictor 26. Although a gas is used to illustrate this embodiment, it should be appreciated that a fluid in another state (*e.g.*, a liquid, plasma, or a combination of states thereof) may be used for testing the flow rate of the flow restrictor. Examples of the gas from gas supply 66 include nitrogen, air or another non-combustible fluid. Testing system 60 may further include a computer 64 to provide a user interface for testing system 60, as well as to run instructions to control and operate the flow tester 62, collect data, calculate, analyze and record results, provide network connectivity to a LAN/WAN, and perform other instructions detailed in the logical flow diagram of Figure 8.

Testing system 60 can be configured to measure the flow permitted by the flow restrictor 26. In other words, the testing system 60 is configurable to measure the flow rate of the test gas through the flow restrictor 26. The testing system 60 may be used in a temperature/humidity-controlled environment to maintain accurate and consistent results. In other embodiments, the testing system 60 may used in any environment with the computer 64 conditioning and correcting results based on its reading of environmental conditions.

The flow tester 62 may include a gas preparation unit 72, gas flow controller 74, gas temperature detector 76, gas in pressure detector 78, the flow restrictor testing block 80 (for housing the tested flow restrictor 26), flow restrictor clamp controller 82, gas out detector 84, gas vent 86, ambient temperature detector 88, and barometric pressure detector 90. Although the flow tester 62 may sense a fluid flow with fewer components, e.g., just a flow sensor, this exemplary embodiment measures temperature, pressure, and barometric pressure parameters to apply pressure and viscosity corrections to determine a standardized mass flow rate through the flow restrictor 26 being tested.

For example, for nitrogen gas, standard volumetric flow rates are determined using the following formula:

$$M_s = M_0 * ((P_g + 2P_s) * v_0 * T_0) \ / \ ((P_g + 2P_b) * v_s * T_s),$$

where $M_S$ is standardized mass flow, $M_0$ is measured mass flow, $P_g$ is gas pressure in inches of mercury ("Hg), $P_s$ is standard pressure (*i.e.*, 29.92 "Hg at 15°C and mean sea level), $P_b$ is barometric pressure ("Hg), $v_0$ s viscosity of the gas (*i.e.* $166.4 + 0.45*T_g$, where $T_g$ is gas temperature), $T_0$ is ambient temperature in Kelvin (*i.e.*, 272 + T (°C), $v_s$ is standard viscosity of nitrogen (*i.e.*, 175.9), and $T_s$ is standard temperature (*i.e.* 294.1 K).

Gas supply 66 can be configured to provide flow tester 62 with a non-combustible test gas such as air, or it can be configured to provide combustible fuel, such as butane or a butane-like mixture. Preferably, the gas should be of a high purity that is clean, dry, and free of oil. The gas is received at gas preparation unit 72, which may include an oil/moisture trap to reduce the risk of contamination. The gas then passes to gas flow controller unit 74, which regulates the flow of gas to provide a desired gas pressure. Gas temperature detector unit 76 measures the temperature of the gas ($T_g$), and gas in detector unit 78 may measure the gas pressure prior to passing through the flow restrictor testing block 80.

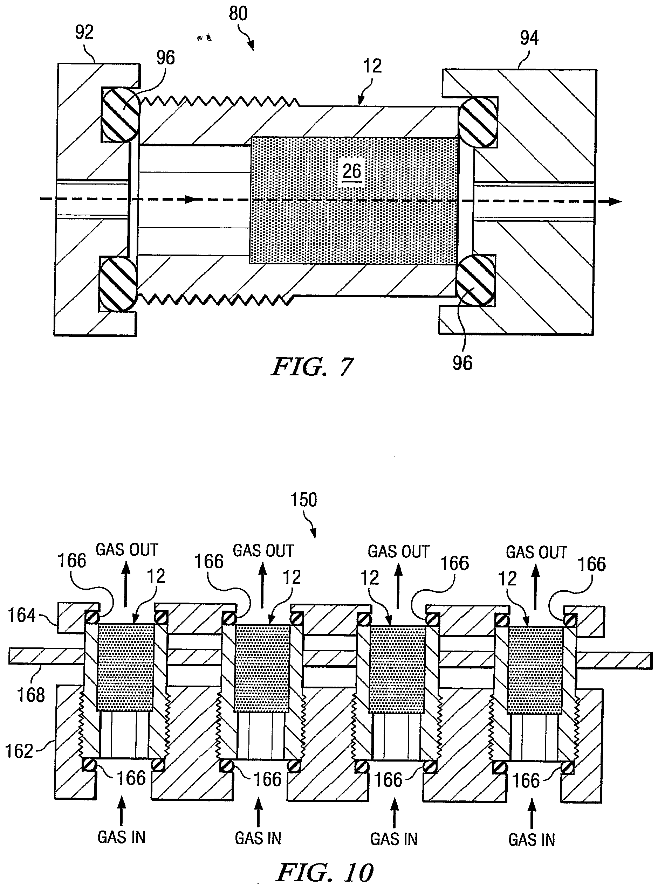

It is to be appreciated that the flow restrictor 26 itself, the flow restrictor assembly 12 or the entire valve assembly 20 may be placed in flow restrictor testing block 80 to perform flow testing. For example, briefly referring to **FIGURE 7,** flow restrictor assembly 12 may be positioned between testing blocks 92, 94 to provide a stable configuration of the flow restrictor for testing. Additionally, a pair of O-rings 96 may be used to seal the interface between the flow restrictor assembly 12 and the testing blocks 92, 94. Further, a clamping apparatus may be used to apply sufficient pressure to effect a seal on the interface between the flow restrictor assembly 12 and the testing blocks 92, 94. In other embodiments, only the flow restrictor 26 may be tested prior to assembly into the lighter 10, or the entire valve assembly 20 may be tested prior to assembly into the lighter 10. Now, referring back to FIGURE 6, flow restrictor clamp controller 82 controls the clamping of testing blocks 92, 94 on the flow restrictor 26 to effect a secure seal. Other suitable sealing arrangements and testing apparatus are contemplated, for example, for testing the flow restrictors in an assembled lighter, and for testing a batch of flow restrictors.

A gas out detector 84 may measure the mass flow of gas exiting the flow restrictor 26 to determine the variable Mo. The gas is then directed to a gas vent unit 86, where it is either collected, or vented into the atmosphere, according to appropriate environmental disposal requirements of the gas. Ambient temperature detector unit 88 measures the ambient temperature (T), and barometric pressure detector unit 90 measures the barometric pressure ($P_b$).

The measured variables from units 76, 78, 84, 88 and 90 are transmitted to computer 64, which is operable to calculate the flow rate (*e.g.,* volumetric flow rate) through the flow restrictor 26, as well as provide other functions. In embodiments where a non-combustible fluid is used for testing, a known correlation, *e.g.* vapor pressure, density, temperature, etc., between the non-combustible test fluid (*e.g.*, nitrogen gas) and the combustible fluid (*e.g.*, butane) may be used to extrapolate a predicted fluid flow rate for the combustible fluid through the flow restrictor 26.

FIGURE 8 illustrates a logical flow diagram of a method for testing a flow restrictor. A desired clamping pressure is set, at 102. The gas pressure is then regulated to the desired test pressure, at 104. A flow restrictor is inserted into flow restrictor testing block, at 106, and the flow restrictor is clamped to ensure a seal, at 108. The clamping pressure should be sufficient to effect a seal on the flow restrictor to avoid leaks. Next, a flow of gas is initiated through the flow restrictor, at 110. Upon determining that the gas flow is in a steady state condition, at 112, mass flow, gas pressure, gas temperature, ambient temperature, and barometric pressure are measured, at 114. Next, flow rate through the flow restrictor is determined, at 116. Gas flow is then stopped, at 118, and the flow restrictor may be released by unclamping it, at 120, and removing the flow restrictor from the test apparatus, at 122.

In embodiments where a non-combustible fluid is used for testing, the correlation between the test fluid (*e.g.*, air or inert gas) and product fluid (*e.g.*, butane) can be confirmed by taking a sampling of flow restrictors and using the test fluid to determine their individual flow rates using a qualified test instrument. After determining flow rates with the instrument, the flow restrictors may then be assembled into test lighters, which are filled with butane. The test lighters may then be actuated to test for flame height. The results of this testing would give a direct correlation between flow rate of the test fluid and actual flame height, while only filling a few test lighters with butane or butane-like material. It is to be appreciated that in alternative embodiments, the flow restrictors could be tested by measuring pressure differential at a predetermined and controlled pressure and temperature with the particular test fluid.

Accordingly, a determined combustible fuel flow rate or a corresponding flow rate of a non-combustible fluid through the flow restrictor 26 will give an indication of a maximum resultant flame height of a lighter incorporating the flow restrictor. In practice, a maximum desired flame height may be designated such that a flow restrictor will not permit a flame height beyond the designated flame height. The flow restrictor can then be manufactured according to this specification (*i.e.,* to have a maximum flame height), thus resulting in a flow restrictor of a desirable porosity. In some cases, a specified range of butane flow rate will correspond to a desired flame height. In one example, the desired flame height can be achieved by providing a flow restrictor that establishes butane flow at a rate of 6.5 standard cubic centimeters per minute (sccm) +/- 0.75 sccm. Accordingly, flow restrictors can be tested according to this specification. As can be appreciated from the foregoing disclosure, the flow restrictors 26 can be tested prior to placement in lighters, thereby alleviating the need to introduce a combustible fluid into such lighters prior to shipment. In some embodiments, the flow restrictors 26 may alternatively be inserted into a lighter housing prior to testing. In these embodiments, testing can be carried out on lighters incorporating the flow restrictors, yet without the necessity of introducing a combustible fuel into the lighter. That is, a non-combustible fluid can be used to test assembled lighters, thus alleviating the need to fill lighters with a combustible fuel prior to shipment.

Testing of flow restrictors 26 prior to assembly of such flow restrictors into lighters permits the manufacture of "dry" lighters with a known and controlled maximum flame height. As used herein, the term "dry lighter" refers to a lighter, which has not been charged (filled) with fuel. Indeed, use of a non-combustible test gas to measure the flow permitted by flow restrictor 26 allows manufacture of lighters without any parts of the lighter having been placed in contact with the butane fuel.

In practice, flow restrictors 26 that fall within predetermined flow parameters are used in the assembly and manufacture of the lighters, such as lighter 10. Flow restrictors 26 that exceed or fall below the predetermined flow parameters are rejected and not used in the manufacture of lighters. For example, those flow restrictors that are found to not provide for flow of butane or butane-like material within the 6.5 sccm +/- .75 sccm range are scrapped. The flow rate inspection of the flow restrictor allows for the pre-qualification of the flow restrictor for the assembly of the lighter, and thereby minimizes or eliminates the potential of rejecting partial or completed lighters for not meeting quality and performance requirements for fluid flow rates.

As has been stated, by testing the flow characteristic of the flow restrictor 26 before it is put in the lighter, either through use of a non-combustible fluid or a combustible fuel, the flow characteristic of the flow restrictor 26 for butane fuel in the lighter can be determined. Again, it is to be understood that "butane fuel" may include one form of butane, or may include a mixture of various forms of butane, or may include butane and one or more other gases, or may be one or more other non-butane-containing combustible fuels that are similar to butane.

Using the methods of the present disclosure to verify the flow characteristic for the lighter allows complete assembly of the lighter without it ever having been charged with combustible fuel. Such "dry lighters" have fewer restrictions on shipment for distribution. By providing verification of the flow characteristic, the maximum flame height may be controlled, without having to charge and test the lighter with combustible fuel.

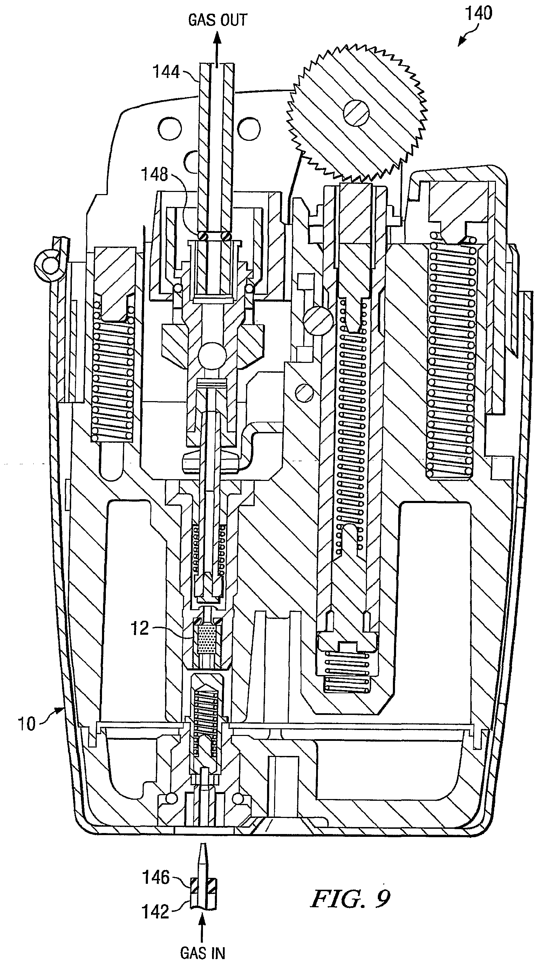

The testing of the flow restrictor 26 according to the present disclosure may be performed on the flow restrictor alone, or may be performed after the flow restrictor is assembled into the lighter. **FIGURE 9** shows an exemplary test apparatus 140 designed to interface with a lighter 10 in which a flow restrictor 26 is already assembled in the lighter. Test apparatus 140 includes a gas filler nozzle 142 and a gas exit port 144. Seals 146, 148 ensure a secure fit to avoid leaks of gas. A seal may be effected by applying appropriate pressure on both gas filler nozzle 142 and gas exit port 144. In this embodiment, a non-combustible fluid is used to test the assembled lighter so as to avoid introduction of combustible fuel into the lighter prior to shipment. In operation, gas enters the lighter 10 through the gas filler nozzle 142 and exits through the gas exit port 144. In some embodiments, the fuel tank may be filled with non-combustible fluid to facilitate testing. Testing may be conducted using the test apparatus and methods described above. After testing, any non-combustible fluid in the fuel tank may be extracted and a vacuum may then be drawn on the fuel tank. Providing a refillable lighter with a fuel tank under vacuum would facilitate and enhance the initial filling of the tank with fuel by the consumer, allowing for the fuel to enter the tank without the need to compress the air sealed in the tank during normal manufacturing processes. This allows for the consumer to maximize the initial fill of the tank with fuel.

In a mass production environment, it is also contemplated that flow restrictors may be tested in batches or with sequential automation or with continuous motion automation. A side view of an exemplary batch testing apparatus 1 50 is illustrated in **FIGURE 10.** Batch testing apparatus 150 includes lower clamp 162, upper clamp 164, and O-rings 166 to provide a seal. Carrier 168 may hold a batch of flow restrictors 26 or flow restrictor assemblies 12, for ease of handling, automation, and distribution. In this exemplary embodiment, carrier 168 provides a four by four array in which to test and handle flow restrictors 26, though it is to be appreciated that the array may have other configurations having various dimensions, shapes, and directions.

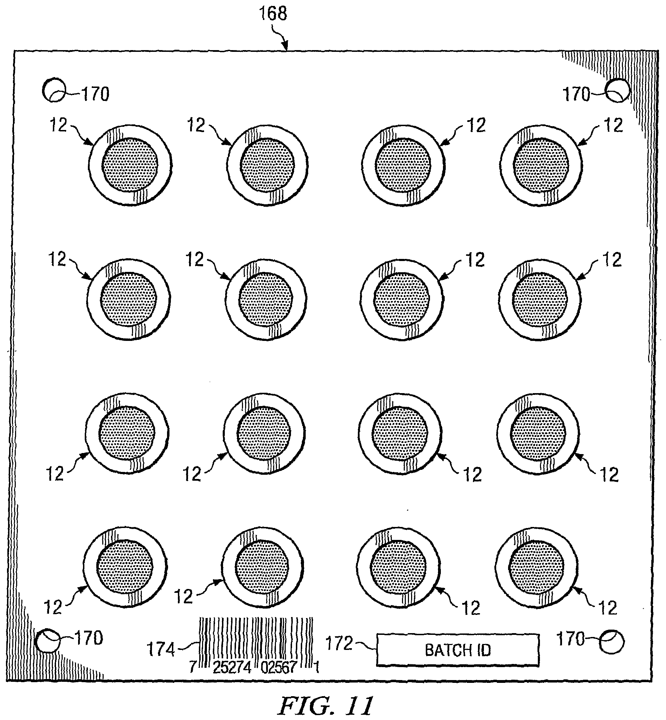

Additional features of an exemplary carrier are shown with reference to **FIGURE 11,** which shows a top-down view of carrier 168 carrying a batch of sixteen flow restrictors 26. Carrier 168 may include alignment guides 170 in each corner to aid positioning and alignment of the batch, a batch identification label 172, and a bar code 174 for automated batch identification. Batch identification label 172 and bar code 174 may identify the batch, as well as other associated batch details, such as origin and manufacturer.

Operationally, a batch may be tested using a similar technique to that described above regarding testing a single flow restrictor 26. Flow restrictors may be tested all at once (*i.e.*, in parallel), or sequentially (*i.e.*, in series), and the volumetric flow characteristics may be calculated by a computer. Batch results may be stored and analyzed, and the results used to accept or reject a single flow restrictor 26 or a batch of flow restrictors.

Additionally, testing of flow restrictor 26, whether as an individual component, assembled in a lighter, or in a batch, may be performed on a statistical sampling basis or on a 100% manufacturing basis. By "100% manufacturing basis" it is meant that every flow restrictor assembled into a lighter is flow tested to verify that it meets the predetermined flow characteristic specification.

While various embodiments of lighters with flow restrictors and methods of manufacturing and testing such flow restrictors according to the principles disclosed herein have been described above, it should be understood that they have been presented by way of example only, and not limitation. For example, in embodiments where a combustible fuel is used to test flow restrictors prior to assembly into a lighter, the flow restrictor may undergo a venting procedure after testing to substantially fully release the residual fuel before being inserted into a lighter. Or the flow restrictor may be purged with another fluid (e.g. air or an inert gas) to expel any residual fuel.

## Claims

1. A method of manufacturing a lighter, the method comprising:

   providing a refillable lighter (10) having a flow restrictor device (12, 26) assembled therein, and wherein the lighter further comprises a fuel tank (14);
   disposing a non-combustible fluid into the fuel tank;
   directing the non-combustible fluid through the flow restrictor device;
   measuring a flow rate of the non-combustible fluid through the flow restrictor device;
   extracting the non-combustible fluid from the fuel tank after measuring the flow rate through the flow restrictor device; and
   drawing a vacuum on the fuel tank.

2. A method according to claim 1 wherein:

when the flow rate is within a specified range of flow rates, categorizing the lighter (10) as having passed the flow rate test; and

when the measured flow rate is outside the specified range of flow rates, categorizing the lighter as having failed the flow rate test.

3. A method according to claim 2, wherein the specified range of flow rates corresponds to a specified range of flow rates of a combustible fluid.

4. A method according to any of the preceding claims, wherein the non-combustible fluid is an inert gas, is air or is nitrogen.

5. A method according to claim 1, wherein the flow restrictor (12, 26) is a porous member, or is a tube of internal diameter that restricts flow rate there through.

6. A method according to claim 1, further comprising analyzing the flow rate of the non-combustible fluid through the flow restrictor (12, 26) against a specified range of flow rates, the specified range of flow rates corresponding to a specified range of flow rates of a combustible fluid.

7. A method according to claim 1, further comprising correlating the measured flow rate of the non-combustible fluid to a flow rate of a combustible fluid, wherein the correlation of the measured flow rate of the non-combustible fluid to the flow rate of the combustible fluid indicates a maximum flame height.

**Patentansprüche**

1. Verfahren zum Herstellen eines Feuerzeuges, wobei das Verfahren umfasst:

Bereitstellen eines nachfüllbaren Feuerzeuges (10) mit einer darin montierten Durchflussbegrenzervorrichtung (12, 26), und wobei das Feuerzeug weiterhin einen Brennstofftank (14) umfasst;
Anordnen eines nichtbrennbaren Fluides in dem Brennstofftank;
Hindurchleiten des nichtbrennbaren Fluides durch die Durchflussbegrenzervorrichtung;
Messen einer Durchflussrate des nichtbrennbaren Fluides durch die Durchflussbegrenzervorrichtung hindurch;
Entziehen des nichtbrennbaren Fluides aus dem Brennstofftank nach dem Messen der Durchflussrate durch die Durchflussbegrenzervorrichtung hindurch und
Versehen des Brennstofftanks mit einem Unterdruck.

2. Verfahren gemäß Anspruch 1, welches aufweist:

wenn die Durchflussrate innerhalb eines spezifizierten Bereiches von Durchflussraten liegt, Kategorisieren des Feuerzeuges (10) in der Weise, dass es die Durchflussratenprüfung bestanden hat; und
wenn die gemessene Durchflussrate außerhalb des spezifizierten Bereiches von Durchflussraten liegt, Kategorisieren des Feuerzeuges in der Weise, dass es die Durchflussratenprüfung nicht bestanden hat.

3. Verfahren gemäß Anspruch 2, bei dem der spezifizierte Bereich von Durchflussraten einem spezifizierten Bereich von Durchflussraten eines brennbaren Fluides entspricht.

4. Verfahren gemäß einem der vorstehenden Ansprüche, bei dem das nichtbrennbare Fluid ein Edelgas, Luft oder Stickstoff ist.

5. Verfahren gemäß Anspruch 1, bei dem der Durchflussbegrenzer (12, 26) ein poröses Element ist oder ein Rohr mit einem Innendurchmesser ist, der die Durchflussrate durch dasselbe hindurch begrenzt.

6. Verfahren gemäß Anspruch 1, das weiterhin ein Analysieren der Durchflussrate des nichtbrennbaren Fluides durch den Durchflussbegrenzer (12, 26) hindurch gegenüber einem spezifizierten Bereich von Durchflussraten umfasst, wobei der spezifizierte Bereich von Durchflussraten einem spezifizierten Bereich von Durchflussraten eines brennbaren Fluides entspricht.

7. Verfahren gemäß Anspruch 1, das weiterhin ein Korrelieren der gemessenen Durchflussrate des nichtbrennbaren Fluides mit einer Durchflussrate eines brennbaren Fluides umfasst, wobei die Korrelation der gemessenen Durchflussrate des nichtbrennbaren Fluides mit der Durchflussrate des brennbaren Fluides eine maximale Flammenhöhe anzeigt.

**Revendications**

1. Procédé de fabrication d'un briquet comprenant des étapes consistant à :

   se procurer un briquer rechargeable (10) dans lequel est monté un dispositif de limitation de flux (12, 26), ce briquet comprenant en outre un réservoir de carburant (14),
   remplir le réservoir de carburant d'un fluide non combustible,
   transférer le fluide non conductible au travers du dispositif de limitation de flux,
   mesurer le débit de fluide non combustible au travers du dispositif de limitation de flux,
   extraire le fluide non combustible du réservoir de carburant après avoir mesuré le débit au travers du dispositif de limitation de flux, et
   créer un vide dans le réservoir de carburant.

2. Procédé conforme à la revendication 1,
   selon lequel lorsque le débit est situé dans une plage de débits définie on classe le briquet (10) comme ayant passé le test de débit, et,
   lorsque le débit mesuré est situé à l'extérieur de la plage de débits définie, on classe le briquet comme n'ayant pas passé le test de débit.

3. Procédé conforme à la revendication 2,
   selon lequel la plage de débits définie correspond à une plage de débits définie d'un fluide combustible.

4. Procédé conforme à l'une quelconque des revendications précédentes, selon lequel le fluide non combustible est un gaz inerte l'air ou l'azote.

5. Procédé conforme à la revendication 1,
   selon lequel l'élément de limitation de flux (12, 26) est un organe poreux ou un tube ayant un diamètre interne qui diminue le débit au travers de celui-ci.

6. Procédé conforme à la revendication 1,
   comprenant en outre une étape consistant à analyser le débit du fluide non combustible au travers de l'élément de limitation de flux (12, 26) par rapport à une plage de débits définie, la plage de débits définie correspondant à une plage de débits définie d'un fluide combustible.

7. Procédé conforme à la revendication 1,
   comprenant en outre une étape consistant à effectuer une corrélation entre le débit mesuré du fluide non combustible et un débit d'un fluide combustible, cette corrélation entre le débit mesuré du fluide non combustible et le débit du fluide combustible indiquant une hauteur de flamme maximum.

**FIG. 1**

FIG. 2

*FIG. 3*

*FIG. 4*

*FIG. 5*

60

FLOW TESTER

GAS VENT

78

GAS IN DETECTOR

80

FLOW RESTRICTOR TESTING BLOCK

84

GAS OUT DETECTOR

86

62

76

GAS TEMPERATURE DETECTOR

FLOW RESTRICTOR CLAMP CONTROLLER

64

82

GAS FLOW CONTROLLER

74

AMBIENT TEMPERATURE DETECTOR

88

GAS PREPARATION UNIT

BAROMETRIC PRESSURE DETECTOR

72

90

66

GAS SUPPLY

*FIG. 6*

FIG. 7

FIG. 10

102 — ADJUST CLAMP APPARATUS PRESSURE TO DESIRED CLAMPING PRESSURE

104 — ADJUST TEST PRESSURE REGULATOR TO DESIRED GAS PRESSURE

106 — PLACE FLOW RESTRICTOR IN TEST APPARATUS

108 — CLAMP FLOW RESTRICTOR IN TEST APPARATUS TO ENSURE A SEAL

110 — INITIATE A FLOW OF GAS THROUGH FLOW RESTRICTOR

IS GAS FLOW IN STEADY STATE CONDITION? — NO

112 — YES

114 — MEASURE GAS FLOW, GAS TEMPERATURE, AMBIENT TEMPERATURE AND BAROMETRIC PRESSURE

116 — CALCULATE GAS FLOW RATE THROUGH FLOW RESTRICTOR

118 — STOP GAS FLOW

120 — UNCLAMP FLOW RESTRICTOR

122 — REMOVE FLOW RESTRICTOR FROM TEST APPARATUS

STOP

*FIG. 8*

GAS OUT

140

144

148

12

10

146

142

GAS IN

*FIG. 9*

*FIG. 11*

**EP 1 946 067 B1**

**REFERENCES CITED IN THE DESCRIPTION**

**Patent documents cited in the description**

- US 59673105 P
- US 4496309 A
- US 4311450 A
- US 860385 A